(19) Europäisches Patentamt European Patent Office Office européen des brevets

(11) **EP 3 454 586 B1**

(12) **FASCICULE DE BREVET EUROPEEN**

(45) Date de publication et mention de la délivrance du brevet:
**03.03.2021 Bulletin 2021/09**

(51) Int Cl.:
*H04W 16/10* (2009.01)     *H04W 16/14* (2009.01)
*H04W 72/08* (2009.01)     *H04W 72/04* (2009.01)
*H04W 74/08* (2009.01)     *H04W 24/02* (2009.01)

(21) Numéro de dépôt: **18193850.7**

(22) Date de dépôt: **11.09.2018**

(54) **PROCÉDÉ DE GESTION DE L'ATTRIBUTION DE CANAUX À DES POINTS D'ACCÈS ET ARCHITECTURE FERROVIAIRE ASSOCIÉE**

**VERFAHREN ZUR VERWALTUNG DER KANALZUORDNUNG AN ZUGANGSPUNKTE, UND ENTSPRECHENDE SCHIENENARCHITEKTUR**

**METHOD FOR MANAGING THE ALLOCATION OF CHANNELS TO ACCESS POINTS AND ASSOCIATED RAILWAY ARCHITECTURE**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **11.09.2017 FR 1758359**

(43) Date de publication de la demande:
**13.03.2019 Bulletin 2019/11**

(73) Titulaire: **ALSTOM Transport Technologies 93400 Saint-Ouen (FR)**

(72) Inventeurs:
• **SIMOENS, Sebastien 69008 Lyon (FR)**
• **COMTE, Renaud 38080 Saint Alban De Roche (FR)**
• **MOYART, Didier 69006 Lyon (FR)**

(74) Mandataire: **Lavoix 2, place d'Estienne d'Orves 75441 Paris Cedex 09 (FR)**

(56) Documents cités:
**EP-A1- 3 104 636     US-A1- 2006 094 371 US-A1- 2016 113 026**

**Description**

Domaine technique

La présente invention porte sur un procédé de gestion de l'attribution de canaux à des points d'accès, ainsi que sur une architecture ferroviaire associée.

L'invention s'applique au domaine ferroviaire.

Etat de la technique antérieure

Pour assurer la circulation de véhicules ferroviaires au sein d'une architecture ferroviaire, l'architecture ferroviaire comprend parfois des points d'accès. Les points d'accès sont destinés à assurer des communications sans fil, par voie radio, avec les véhicules.

Tel est le cas, par exemple, d'une architecture ferroviaire comprenant un système de contrôle des véhicules basée sur la communication, également désigné par l'acronyme CBTC, de l'anglais « Communication Based Train Control ».

Dans le cas de réseaux sans fil, plusieurs canaux sont alloués en fonction des usages ou des utilisateurs qui utilisent les réseaux sans fils. Tel est le cas, par exemple, des réseaux WLAN, de l'anglais « Wireless Local Area Networks » signifiant réseaux locaux sans fil.

Par l'expression « canal », il est entendu une plage de fréquences d'ondes radio.

Dans une optique d'utilisation optimale des fréquences, en Europe comme aux Etats-Unis, certains canaux sont partagés lors de l'allocation des canaux. Les canaux partagés sont alloués respectivement à un premier utilisateur, dit utilisateur primaire, et à un second utilisateur, dit utilisateur secondaire. L'utilisateur primaire est alors prioritaire sur l'utilisateur secondaire dans l'utilisation d'un canal donné.

Il arrive que des points d'accès d'une architecture ferroviaire fonctionnent sur des canaux partagés.

Dans un tel cas, les points d'accès sont des utilisateurs secondaires, les utilisateurs primaires étant, par exemple, des systèmes radars, de l'anglais « Radio Détection And Ranging » signifiant détection électromagnétique et mesure de la distance. Par conséquent, les points d'accès sont moins prioritaires que les utilisateurs primaires, ce qui conduit un point d'accès mettant en œuvre des communications à devoir rapidement changer de canal.

Dans une telle situation, un mécanisme d'évitement des utilisateurs primaires est mis en œuvre : après une période prédéterminée de non-utilisation, le point d'accès est autorisé à revenir sur le premier canal après avoir mis en œuvre une procédure de vérification.

La période prédéterminée de non-utilisation est désignée par l'acronyme NOP, de l'anglais « Non-Occupancy Period » signifiant période de non occupation.

La procédure de vérification consiste à vérifier que le canal n'est pas utilisé par des utilisateurs primaires. La procédure de vérification est désignée par l'acronyme CAC, de l'anglais « Channel Availability Check » signifiant vérification de disponibilité du canal.

Le mécanisme d'évitement des utilisateurs primaires est appelé la sélection dynamique de fréquences et est souvent désigné par l'acronyme DFS, de l'anglais « Dynamic Frequency Selection » signifiant sélection dynamique des fréquences.

Toutefois, la mise en œuvre de la sélection dynamique de fréquence dans le domaine ferroviaire pose un certain nombre de problèmes.

Tout d'abord, la détection d'un utilisateur primaire perturbe le plan de fréquences de l'architecture ferroviaire.

En effet, les points d'accès de l'architecture ferroviaire utilisent différents canaux, de sorte à ne pas créer d'interférences lorsque des communications entre les points d'accès et les véhicules sont mises en œuvre. Par « plan de fréquences », il est entendu l'allocation des canaux entre les différents points d'accès. Le plan de fréquences est conçu de sorte à minimiser le risque d'interférences entre les points d'accès.

De fait, lors de la mise en œuvre de la sélection dynamique de fréquence, une modification du canal d'un point d'accès modifie le plan de fréquences, ce qui a pour conséquence d'augmenter le risque d'interférences entre les points d'accès.

Ensuite, la régulation européenne impose une durée limite d'une seconde au point d'accès pour laisser à l'utilisateur prioritaire la libre utilisation d'un canal. La régulation européenne impose alors une complexité algorithmique du procédé de sélection dynamique relativement faible et un nombre réduit de dispositifs de communication.

Par ailleurs, le plan de fréquences est susceptible de devenir instable lorsque le taux d'occurrence de détection de signaux issus d'utilisateurs primaires, tels des radars par exemple, augmente.

De fait, la disponibilité des liaisons établies par des stations de base est susceptible d'être affectée par la mise en œuvre de la sélection dynamique de fréquence, et en particulier de la procédure CAC.

Les demandes de brevet US 2006/094371 A1, US 2016/113026 A1 et EP 3 104 636 A1 fournissent des enseignements complémentaires sur le contexte de la présente demande. En particulier, les documents US 2006/094371 A1, US 2016/113026 A1 décrivent chacun un procédé simplifié de sélection de fréquences dans un réseau WLAN et le document EP 3 104 636 A1 décrit un procédé de gestion d'attribution de canaux permettant de réduire les temps de communication dans une architecture ferroviaire.

Résumé de l'invention

Il existe donc un besoin pour un procédé de gestion de l'attribution de canaux à des points d'accès dans une architecture ferroviaire permettant de résoudre les problèmes précédents, tout en présentant une faible

A cet effet, il est proposé un procédé de gestion de l'attribution de canaux à des points d'accès selon la revendication 1.

Suivants d'autres modes de réalisation, le procédé comprend une ou plusieurs des caractéristiques des revendications 2 à 9.

Il est aussi proposé une architecture ferroviaire selon la revendication 10.

Brève description des figures

L'invention sera mieux comprise à l'aide de la description qui va suivre, donnée uniquement à titre d'exemple non limitatif et faite en se référant aux dessins annexés, sur lesquels :

- la figure 1 est une représentation schématique d'un exemple d'architecture ferroviaire, et
- la figure 2 est une représentation schématique d'un exemple de table utilisée par le procédé.

Description détaillée de l'invention

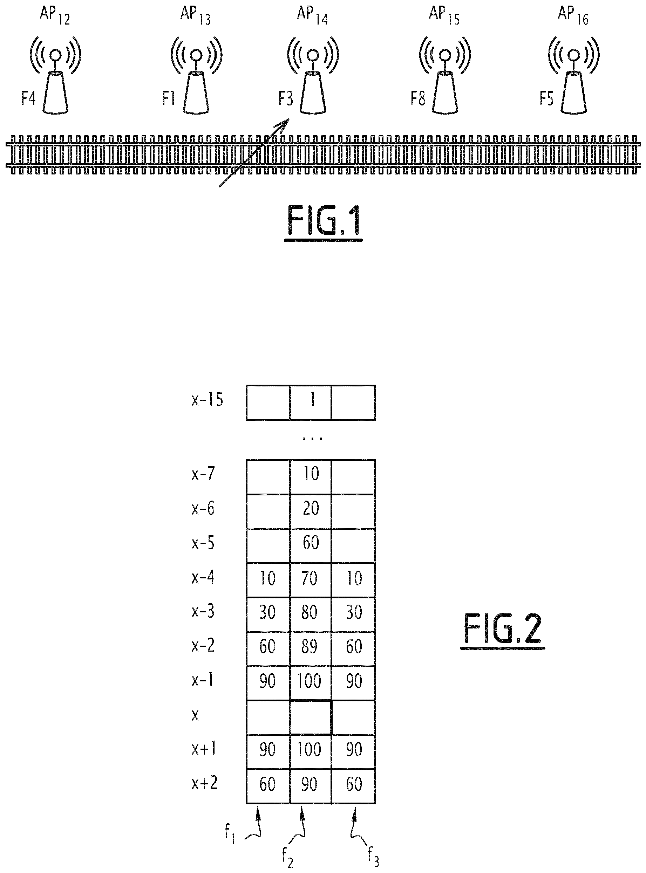

La figure 1 représente une architecture ferroviaire 10 propre à permettre la circulation de véhicules ferroviaires, non représentés sur la figure 1.

L'architecture ferroviaire 10 comprend des voies 12, un ensemble de points d'accès AP répartis le long des voies 12 et un contrôleur, non représenté sur la figure 1. Les points d'accès AP sont, par exemple, reliés à un système de contrôle de la circulation de véhicules et régulièrement répartis le long des voies 16.

Les points d'accès AP sont propres à mettre en œuvre des communications bidirectionnelles, par exemple avec les véhicules ferroviaires.

Les communications permettent, par exemple, de fournir aux véhicules des commandes, telles des autorisations de mouvement.

Les communications permettent, par exemple, de recevoir des véhicules des informations de circulation, telles leur position sur les voies 12.

Les points d'accès AP sont, par exemple, propres à communiquer à partir d'un protocole Ethernet.

Avantageusement, le protocole Ethernet est doté d'une couche sécuritaire.

Dans un réseau ferroviaire, les point d'accès AP sont fixes et sont toujours allumés. Les points d'accès AP sont configurés pour garantir la communication dans toute situation rencontrée. En ce sens, un point d'accès AP d'un réseau ferroviaire se distingue d'un point d'accès d'un simple réseau VLAN.

Chaque point d'accès AP est propre à communiquer sur un canal.

Le canal est choisi parmi un ensemble de canaux distincts.

A chaque canal correspond une fréquence F spécifique.

La fréquence F d'un canal est la fréquence centrale de la plage de fréquences du canal.

Dans ce qui suit, un canal et la fréquence spécifique correspondante au canal sont indifféremment désignés par la référence F.

De fait, lorsque des points d'accès AP mettent en œuvre des communications, chaque point d'accès AP communique selon une fréquence F dédiée, choisie parmi un ensemble de fréquences F.

Selon l'exemple proposé à la figure 1, il est supposé que seize points d'accès sont disponibles.

Chaque point d'accès est noté $AP_i$, i étant un nombre entier.

Par convention, il est considéré que l'indice i est croissant selon l'éloignement spatial par rapport à un point de référence. De fait, plus l'indice i est grand, plus le point d'accès associé est loin du point de référence.

Le point de référence est, par exemple, un point d'accès AP situé à une extrémité des voies 16. Dans ce cas, le point de référence est le premier point d'accès $AP_1$.

Sur l'exemple de la figure 1, cinq points d'accès sont représentés, à savoir le douzième point d'accès $AP_{12}$, le treizième point d'accès $AP_{13}$, le quatorzième point d'accès $AP_{14}$, le quinzième point d'accès $AP_{15}$ et le seizième point d'accès $AP_{16}$.

Chaque station de base $AP_i$ comprend au moins un émetteur-récepteur radio pour mettre en œuvre les communications radio.

L'émetteur-récepteur est adapté pour faire le lien entre un signal numérique en bande de base et le signal radiofréquence propagé sur un canal.

L'émetteur-récepteur comprend une première partie et une deuxième partie.

Une première partie est une machine à état numérique assurant le codage en bande de base.

Une seconde partie est un circuit analogique appelé frontal radiofréquence, de l'anglais « front-end radio frequency », propre à assurer la transposition du signal en bande de base vers la fréquence correspondant au canal.

Selon ce mode de réalisation, chaque point d'accès $AP_i$ comprend un premier frontal radiofréquence et un second frontal radiofréquence. Une telle structure de point d'accès est connue en anglais sous l'expression « dual radio front end » signifiant à double frontal radiofréquence.

Dans chaque point d'accès $AP_i$, chaque frontal radiofréquence est destiné à la communication sur un canal.

En outre, pour chaque point d'accès $AP_i$, un seul frontal radiofréquence est destiné à la mise en œuvre du procédé. En particulier, un seul frontal radiofréquence est destiné à la mise en œuvre de l'étape de vérification CAC.

Le contrôleur comprend une mémoire comprenant un ensemble d'instructions logicielles et un processeur propre à exécuter au moins une partie des instructions logicielles.

Les instructions logicielles, une fois exécutées, permettent la mise en œuvre du procédé de gestion de l'attribution de canaux aux points d'accès $AP_i$.

Dans l'exemple de la figure 1, le contrôleur est formé de plusieurs contrôleurs, par exemple tous identiques, situés chacun dans un point d'accès $AP_i$ respectif.

Dans ce cas, le contrôleur est propre à commander, pour chaque point d'accès $AP_i$, le frontal radiofréquence alloué à la mise en œuvre du procédé de gestion de l'attribution de canaux aux points d'accès $AP_i$.

L'ensemble formé par le contrôleur et le premier frontal et le second frontal est propre à mettre en œuvre le procédé de gestion de l'attribution de canaux.

Le fonctionnement de l'ensemble est maintenant décrit, en référence à un exemple de mise en œuvre d'un procédé d'attribution de canaux à des points d'accès $AP_i$.

Un ensemble de canaux $F_i$ est alloué aux points d'accès $AP_i$, au moins un canal étant partagé avec des utilisateurs primaires.

Il est considéré que l'ensemble de canaux $F_i$ alloué aux points d'accès $AP_i$ est un premier canal $F_1$, un deuxième canal $F_2$ et un troisième canal $F_3$, la première fréquence $F_1$ étant inférieure à la deuxième fréquence $F_2$, elle-même inférieure à la troisième fréquence $F_3$.

Dans le présent exemple, il est considéré que tous les canaux $F_1$, $F_2$ et $F_3$ sont partagés avec des utilisateurs primaires.

Comme indiqué précédemment, pour les canaux partagés, les utilisateurs primaires sont prioritaires, dans l'utilisation des canaux, sur les points d'accès $AP_i$. Dans ce qui suit, les utilisateurs primaires sont également appelés utilisateurs prioritaires.

Dans l'état initial, il est considéré que le point d'accès $AP_n$ communique sur un canal attribué, le canal attribué étant le deuxième canal $F_2$.

Il est également considéré, dans l'état initial, que seuls les points d'accès $AP_{n-5}$, $AP_{n-4}$, $AP_{n-2}$ et $AP_{n+2}$ communiquent, le point d'accès $AP_{n-5}$ communiquant sur le deuxième canal $F_2$, les points d'accès $AP_{n-4}$ et $AP_{n-2}$ communiquant sur le premier canal $F_1$ et le point d'accès $AP_{n+2}$ communiquant sur le troisième canal $F_3$.

Le procédé comprend une première étape de détection d'un signal d'un autre utilisateur sur un canal attribué à un point d'accès, une deuxième étape de calcul de coût, une troisième étape de détermination d'un canal et une quatrième étape de basculement du point d'accès sur le canal déterminé.

Selon la première étape, un signal d'un autre utilisateur prioritaire est détecté, par exemple par le point d'accès $AP_n$, sur le canal $F_2$ attribué au point d'accès $AP_n$. L'autre utilisateur est, par exemple, un radar.

La première étape consiste, par exemple, à capter au niveau du point d'accès $AP_n$ un signal émis dans un protocole distinct du protocole utilisé par le point d'accès $AP_n$.

Il est alors déterminé un nouveau canal de fréquence disponible pour le point d'accès $AP_n$, premièrement par mise en œuvre de la deuxième étape de calcul de coût.

Selon la deuxième étape, pour une pluralité de canaux différents du canal $F_2$ attribué, dits canaux considérés, il est calculé une fonction de coût.

La fonction de coût associe à la fréquence d'un canal considéré un coût.

Le coût du canal considéré est une somme de coefficients représentatifs des interférences possibles d'un fonctionnement selon le canal considéré avec les points d'accès fonctionnant sur un canal donné.

Par « coefficient représentatif », il est entendu un coefficient dont la valeur varie avec le niveau d'interférences possibles. Par exemple, la valeur du coefficient est une fonction croissante linéaire du niveau des éventuelles interférences.

D'une façon générale, des interférences sont générées par l'interaction d'un premier signal présentant une première intensité et d'un second signal présentant une seconde intensité. En présence d'interférences, l'intensité totale est égale à la somme de la première intensité et de la seconde intensité à laquelle est soustraite une intensité d'interférence correspondant à la contribution intégrée des interférences destructives entre les signaux. Par « niveau » des interférences, il est, par exemple, entendu la valeur de l'intensité d'interférence. Toute fonction de l'intensité d'interférence pourrait également être utilisée pour définir le « niveau » des interférences.

Le canal donné est choisi parmi le groupe constitué du canal considéré, du canal ayant la fréquence inférieure la plus proche de la fréquence du canal considéré, et du canal ayant la fréquence supérieure la plus proche de la fréquence du canal considéré.

Dans le présent exemple, la fonction de coût est appliquée au premier canal $F_1$ et au troisième canal $F_3$.

Le coût associé à la première fréquence $F_1$ est une somme de coefficients représentatifs des interférences possibles d'un fonctionnement selon le premier canal $F_1$ avec les points d'accès fonctionnant sur le canal $F_1$ et les points d'accès fonctionnant sur le deuxième canal $F_2$.

De façon analogue, le coût associé à la troisième fréquence $F_3$ est une somme de coefficients représentatifs des interférences possibles d'un fonctionnement selon le troisième canal $F_3$ avec les points d'accès fonctionnant sur le canal $F_3$ et les points d'accès fonctionnant sur le deuxième canal $F_2$.

Selon un autre mode de réalisation, une étape de détermination des canaux disponibles est mise en œuvre, les canaux disponibles étant les canaux non attribués. Dans ce cas, l'étape de calcul des fonctions de coût est uniquement mise en œuvre pour les canaux disponibles.

Dans le présent exemple, tous les canaux $F_1$, $F_2$ et $F_3$ sont attribués à des points d'accès. La mise en œuvre de l'étape de détermination conduit à mettre en œuvre le calcul des fonctions de coût pour tous les canaux autres que le canal $F_2$ attribué, à savoir pour les premier et troisième canaux $F_1$ et $F_3$, comme décrit précédemment.

Selon un mode particulier de réalisation, les coefficients sont pondérés par la distance entre le point d'accès ayant détecté le signal d'un autre utilisateur et chacun des points d'accès avec lesquels des interférences sont possibles.

Dans un tel cas, un coefficient associé à un point d'accès pour lequel des interférences sont possibles diminue avec la distance séparant le point d'accès et le point d'accès ayant détecté le signal.

A titre d'exemple, les coefficients sont pondérés par un facteur valant $1/|i - j|$, où $|.|$ désigne l'opération mathématique valeur absolue et où $i$ et $j$ sont deux nombres entiers, $i$ étant l'indice d'un point d'accès et $j$ l'indice d'un autre point d'accès.

Avantageusement, il est considéré que lorsque $|i - j|$ dépasse une valeur $D$, $D$ étant un nombre entier, le facteur $1/|i - j|$ vaut 0. La valeur de $D$ correspond à la distance à partir de laquelle l'effet des interférences est négligeable.

Selon un mode particulier de réalisation, une valeur maximale est attribuée à un point d'accès adjacent pour le même canal que le canal attribué au point d'accès.

Dans le présent exemple, en supposant que le point d'accès $AP_n$ fonctionne sur le deuxième canal $F_2$ et que les points d'accès $AP_{n-1}$ et $AP_{n+1}$ fonctionnent également sur le deuxième canal $F_2$, une valeur maximale, par exemple égale à 100, est attribuée aux points d'accès $AP_{n-1}$ et $AP_{n+1}$.

Selon un mode particulier de réalisation, une valeur correspondant à au plus 90% de la valeur maximale est attribuée à un point d'accès adjacent pour un canal ayant la fréquence inférieure la plus proche de la fréquence du canal attribué ou un canal ayant la fréquence supérieure la plus proche de la fréquence du canal attribué.

Dans le présent exemple, en supposant que le point d'accès $AP_n$ fonctionne sur le deuxième canal $F_2$ et que les points d'accès $AP_{n-1}$ et $AP_{n+1}$ fonctionnent sur le premier canal $F_1$ ou sur le troisième canal $F_3$, une valeur, par exemple égale à 90, est attribuée aux points d'accès $AP_{n-1}$ et $AP_{n+1}$.

Selon un mode particulier de réalisation, les coefficients de la somme sont tabulés dans des tables.

A chaque point d'accès $AP_i$ correspond une table, notée $T_i$.

La table $T_i$ contient des coefficients représentatifs des interférences possibles du point d'accès $AP_i$ avec d'autres points d'accès fonctionnant selon chacun des canaux de l'ensemble de canaux alloué aux points d'accès.

La figure 2 représente de manière générale une table $T_x$ correspondant à un point d'accès $AP_x$, fonctionnant sur le deuxième canal $F_2$, pour lequel doit être déterminé un nouveau canal de fréquence disponible.

Un tel exemple de table $T_x$ s'applique à tout type de point d'accès $AP_x$ de sorte que, dans certains modes de réalisation, la même table $T_x$ est mémorisée dans chaque point d'accès.

A titre d'exemple, dans la suite, il est supposé que $x=n$ pour faciliter l'exposé qui va suivre, un tel exemple n'étant nullement limitatif.

La figure 2 représente la table $T_n$ correspondant au point d'accès $AP_n$, fonctionnant sur le deuxième canal $F_2$, pour lequel doit être déterminé un nouveau canal de fréquence disponible.

La table $T_n$ contient N-1 lignes, où N est le nombre de points d'accès $AP_i$ pour lesquels l'effet des interférences avec le point d'accès $AP_n$ peut ne pas être négligeable selon le canal utilisé.

La table $T_n$ contient M colonnes, où M est le nombre de fréquences susceptibles d'interférer entre elles et faisant partie de l'ensemble de fréquences alloué aux points d'accès. Dans le présent exemple, M vaut trois et la table $T_n$ contient trois colonnes.

Dans ce qui suit, il est noté $t_{j,\,k}$ le coefficient de la table $T_n$ situé à la j-ème ligne et à la k-ème colonne. Le coefficient $t_{j,\,k}$ est représentatif du niveau d'interférence du point d'accès $AP_n$ fonctionnant selon la fréquence $F_2$ avec le point d'accès $AP_j$ fonctionnant sur la fréquence $F_k$.

A titre d'exemple, et comme visible sur la figure 2 :

- le coefficient $t_{n-5,\,1}$ n'est pas renseigné, et vaut, par exemple, 0 ;
- le coefficient $t_{n-5,\,2}$ vaut 60 ;
- le coefficient $t_{n-5,\,3}$ n'est pas renseigné, et vaut, par exemple, 0 ;
- le coefficient $t_{n-4,\,1}$ vaut 10 ;
- le coefficient $t_{n-4,\,2}$ vaut 70 ;
- le coefficient $t_{n-4,\,3}$ vaut 10 ;
- le coefficient $t_{n-2,\,1}$ vaut 60 ;
- le coefficient $t_{n-2,\,2}$ vaut 89 ;
- le coefficient $t_{n-2,\,3}$ vaut 60 ;
- le coefficient $t_{n+1,\,1}$ vaut 90 ;
- le coefficient $t_{n+1,\,2}$ vaut 100, et
- le coefficient $t_{n+1,\,3}$ vaut 90.

Les tables $T_i$ sont, par exemple, mémorisées dans la mémoire du contrôleur.

Lorsque le contrôleur est formé de plusieurs contrôleurs, par exemple tous identiques et situés chacun dans un point d'accès $AP_i$ respectif, chaque table $T_i$ correspondant à un point d'accès $T_i$ donné est mémorisée dans le point d'accès $AP_i$ donné au niveau du contrôleur du point d'accès $AP_i$ donné.

Dans le cas du point d'accès $AP_n$, comme indiqué précédemment, la fonction de coût est appliquée au premier canal $F_1$ et au troisième canal $F_3$.

La fonction de coût appliquée au premier canal

$F_1$ est notée $C(F_1)$ et la fonction de coût appliquée au troisième canal $F_3$ est notée $C(F_3)$. Il vient alors :

$$C(F_1) = t_{n-5,\,2} + t_{n-4,\,1} + t_{n-2,\,1},$$

et

$$C(F_3) = t_{n-5,\,2} + t_{n+1,\,3}$$

soit:

$$C(F_1) = 60 + 10 + 60 = 130,$$

et

$$C(F_3) = 60 + 90 = 150.$$

Selon un autre mode de réalisation, la fonction de coût est calculée en pondérant la somme des coefficients avec des valeurs de pondération, de sorte que la seule valeur de pondération non nulle soit la valeur de pondération associée au coefficient maximale.

Dans un tel cas, il est obtenu $C(F_1) = 60$ et $C(F_3) = 90$.

La troisième étape de détermination d'un canal est ensuite mise en œuvre.

Selon la troisième étape, il est déterminé le canal pour lequel la valeur par la fonction de coût est la plus faible, de sorte à obtenir un canal déterminé.

Dans le présent exemple, la valeur par la fonction de coût est la plus faible pour le premier canal $F_1$ et le canal déterminé est le canal $F_1$.

Enfin, la quatrième étape de basculement du point d'accès $AP_n$ sur le canal $F_1$ déterminé est mise en œuvre.

Le point d'accès $AP_n$ communique désormais sur le premier canal $F_1$.

Selon un autre mode de réalisation, à l'issue de la quatrième étape, une cinquième étape est mise en œuvre.

Dans la cinquième étape, le point d'accès $AP_n$ ayant basculé de canal communique aux points d'accès voisins le nouveau canal déterminé.

Avantageusement, le point d'accès $AP_n$ ayant basculé de canal ne communique qu'aux points d'accès situés à une distance au plus égale à D le nouveau canal déterminé.

Selon un mode particulier de réalisation, avant la mise en œuvre de la quatrième étape, une étape intermédiaire est mise en œuvre.

L'étape intermédiaire est au moins mise en œuvre par le point d'accès $AP_n$ devant basculer de canal.

Selon l'étape intermédiaire, une attente pendant un temps d'attente prédéfini est mise en œuvre.

Puis, il est procédé, par le contrôleur, à une vérification de l'utilisation courante du canal déterminé par un autre utilisateur.

Enfin, lorsque le canal déterminé n'est plus utilisé par un autre utilisateur, il est mis en œuvre le basculement du point d'accès $AP_n$ sur le canal déterminé.

Tout d'abord, lorsqu'un point d'accès spécifique modifie le canal courant sur lequel le point d'accès communique, seul le canal du point d'accès spécifique est modifié, les autres points d'accès conservant leur canal respectif. Ainsi, il n'y a pas lieu de recalculer systématiquement le plan de fréquences, ce qui garantit une faible complexité. En outre, cela permet de favoriser la stabilité du système.

D'autre part, la simplicité du calcul de la fonction de coût permet de limiter la complexité calculatoire. D'ailleurs, les tables utilisées pour le calcul sont de tailles limitées et, en générale, stable dans le temps, ce qui limite les besoins de stockage.

De plus, le fait de disposer d'un frontal radiofréquence alloué à la mise en œuvre de la procédure CAC présente comme avantage de disposer de point d'accès dont les communications ne sont pas impactées par la mise en œuvre du procédé, et en particulier de la procédure CAC.

Selon une variante de réalisation, le calcul est mis en œuvre par un contrôleur propre à contrôler un sous-ensemble de points d'accès avec des indices adjacents et à communiquer avec chaque point d'accès de son sous-ensemble et avec les autres contrôleurs.

## Revendications

1. Procédé de gestion de l'attribution de canaux ($F_1$, $F_2$, $F_3$) à des points d'accès ($AP_i$), les points d'accès ($AP_i$) appartenant à une architecture ferroviaire (10), l'architecture ferroviaire (10) comprenant un contrôleur, chaque canal ($F_1$, $F_2$, $F_3$) correspondant à une fréquence spécifique, l'utilisation d'au moins un canal ($F_2$) étant partagée entre l'architecture ferroviaire (10) et un autre utilisateur prioritaire, dans l'utilisation du canal ($F_2$), par rapport aux points d'accès ($AP_i$), le procédé étant mis en œuvre par un contrôleur et comprenant les étapes de :

- détection d'un signal d'un autre utilisateur sur un canal ($F_2$) attribué à un point d'accès ($AP_n$),
- pour une pluralité de canaux ($F_j$) différents du canal ($F_2$) attribué, calcul d'une fonction de coût, la fonction de coût associant à la fréquence d'un canal un coût ($C$), le coût ($C$) étant une somme de coefficients ($t_{i,\,j}$) représentatifs des interférences possibles avec les points d'accès ($AP_i$) fonctionnant sur un canal choisi parmi le groupe constitué du canal considéré ($F_j$), du canal ($F_{j-1}$) ayant la fréquence inférieure la plus proche de la fréquence du canal considéré et du canal

$(F_{j+1})$ ayant la fréquence supérieure la plus proche de la fréquence du canal $(F_j)$ considéré,
- détermination du canal pour lequel la valeur par la fonction de coût est la plus faible, pour obtenir un canal déterminé $(F_1)$, et
- basculement du point d'accès $(AP_n)$ sur le canal déterminé $(F_1)$.

2. Procédé selon la revendication 1, dans lequel, à l'étape de calcul, les coefficients $(t_{i,j})$ de la somme sont pondérés par la distance entre le point d'accès $(AP_n)$ ayant détecté le signal d'un autre utilisateur et chacun des points d'accès $(AP_i)$ avec lesquels l'interférence est possible.

3. Procédé selon la revendication 1 ou 2, dans lequel, à l'étape de calcul, une valeur maximale est attribuée à un coefficient d'un point d'accès adjacent $(AP_{n-1}, AP_{n+1})$ pour le même canal que le canal $(F_2)$ attribué au point d'accès $(AP_n)$.

4. Procédé selon la revendication 3, dans lequel, à l'étape de calcul, une valeur correspondant à au plus 90% de la valeur maximale est attribuée à un coefficient d'un point d'accès adjacent $(AP_{n-1}, AP_{n+1})$ pour un canal $(F_1)$ ayant la fréquence inférieure la plus proche de la fréquence du canal considéré ou un canal ayant la fréquence $(F_3)$ supérieure la plus proche de la fréquence du canal $(F_1)$ considéré.

5. Procédé selon la revendication 1 à 4, dans lequel, à l'étape de calcul, les coefficients $(t_{i,j})$ de la somme sont tabulés dans une table $(T_n)$.

6. Procédé selon la revendication 5, dans lequel une table $(T_i)$ est associée à chaque point d'accès $(AP_i)$, chaque table $(T_i)$ étant mémorisée dans le point d'accès $(AP_i)$ correspondant.

7. Procédé selon l'une quelconque des revendications 1 à 6, dans lequel le procédé comprend, en outre, une étape de détermination des canaux $(F_1, F_3)$ disponibles, les canaux $(F_1, F_3)$ disponibles étant les canaux non attribués à un point d'accès, l'étape de calcul étant mise en œuvre uniquement pour les canaux disponibles $(F_1, F_3)$.

8. Procédé selon l'une quelconque des revendications 1 à 7, dans lequel le procédé comprend, en outre, des étapes :

    - d'attente d'un temps prédéfini,
    - de vérification de l'utilisation courante du canal déterminé $(F_1)$ par un autre utilisateur, et
    - de basculement du point d'accès sur le canal déterminé $(F_1)$ lorsque le canal déterminé $(F_1)$ n'est plus utilisé par un autre utilisateur.

9. Procédé selon la revendication 8, dans lequel chaque point d'accès $(AP_i)$ comprend un premier frontal radiofréquence et un second frontal radiofréquence, chaque frontal radiofréquence étant destiné à la communication sur un canal, l'étape de vérification étant mise en œuvre par un seul frontal radiofréquence.

10. Architecture ferroviaire (10) comprenant un contrôleur mettant en œuvre un procédé de gestion de l'attribution de canaux $(F_1, F_2, F_3)$ à des points d'accès $(AP_i)$, les points d'accès $(AP_i)$ appartenant à l'architecture ferroviaire (10), chaque canal $(F_1, F_2, F_3)$ correspondant à une fréquence spécifique, l'utilisation d'au moins un canal $(F_2)$ étant partagée entre l'architecture ferroviaire (10) et un autre utilisateur prioritaire, dans l'utilisation du canal, par rapport à l'architecture ferroviaire (10), le contrôleur étant propre à :

    - détecter un signal d'un autre utilisateur sur un canal $(F_2)$ attribué à un point d'accès $(AP_n)$,
    - pour une pluralité de canaux $(F_j)$ différents du canal $(F_2)$ attribué, calculer une fonction de coût, la fonction de coût associant à la fréquence d'un canal un coût $(C)$, le coût $(C)$ étant une somme de coefficients $(t_{i,j})$ représentatifs des interférences possibles avec les points d'accès $(AP_i)$ fonctionnant sur un canal choisi parmi le groupe constitué du canal considéré $(F_j)$, du canal $(F_{j-1})$ ayant la fréquence inférieure la plus proche de la fréquence du canal considéré et du canal $(F_{j+1})$ ayant la fréquence supérieure la plus proche de la fréquence du canal $(F_j)$ considéré,
    - déterminer le canal pour lequel la valeur par la fonction de coût est la plus faible, pour obtenir un canal déterminé $(F_1)$, et
    - basculer le point d'accès $(AP_n)$ sur le canal déterminé $(F_1)$.

**Patentansprüche**

1. Verfahren zur Steuerung der Zuteilung von Kanälen $(F_1, F_2, F_3)$ an Zugangspunkte $(AP_i)$, wobei die Zugangspunkte $(AP_i)$ zu einer Eisenbahnarchitektur (10) gehören, wobei die Eisenbahnarchitektur (10) eine Steuereinrichtung aufweist, wobei jeder Kanal $(F_1, F_2, F_3)$ mit einer bestimmten Frequenz korrespondiert, wobei die Nutzung von mindestens einem Kanal $(F_1, F_2, F_3)$ zwischen der Eisenbahnarchitektur (10) und einem anderen Nutzer, welcher bei der Nutzung des Kanals (F2) Vorrang vor den Zugangspunkten $(AP_i)$ hat, aufgeteilt wird, wobei das Verfahren durch eine Steuereinrichtung durchgeführt wird und aufweist die Schritte des:

    - Erfassens eines Signals eines anderen Nut-

zers auf einem Kanal (F$_2$), welcher einem Zugangspunkt (AP$_n$) zugeteilt ist,
- für eine Mehrzahl von Kanälen (F$_j$), welche von dem zugeteilten Kanal (F2) verschieden sind, Berechnens einer Kostenfunktion, wobei die Kostenfunktion der Frequenz eines Kanals einen Kostenfaktor (C) zuordnet, wobei der Kostenfaktor (C) eine Summe der Koeffizienten (ti,j) ist, welche repräsentativ sind für mögliche Interferenzen mit den Zugangspunkten, welche auf einem Kanal arbeiten, der aus der Gruppe, die durch den betrachteten Kanal (F$_j$), den Kanal (F$_{j-1}$) mit der zur Frequenz des betrachteten Kanals (F$_j$) nächstkleineren Frequenz und den Kanal (F$_{j+1}$) mit der zur Frequenz des betrachteten Kanals (F$_j$) nächstgrößeren Frequenz gebildet ist, ausgewählt ist,
- Ermittelns des Kanals, für welchen der Wert durch die Kostenfunktion am niedrigsten ist, um einen ermittelten Kanal (F$_1$) zu erlangen, und
- Wechselns des Zugangspunkts (AP$_n$) auf den ermittelten Kanal (F$_1$).

2.  Verfahren gemäß dem Anspruch 1, wobei, bei dem Schritt des Berechnens, die Koeffizienten (ti,j) der Summe gewichtet werden mittels der Distanz zwischen dem Zugangspunkts (AP$_n$), welcher das Signal eines anderen Nutzers erfasst hat, und jedem der Zugangspunkte (AP$_i$), mit welchen die Interferenz möglich ist.

3.  Verfahren gemäß dem Anspruch 1 oder 2, wobei, bei dem Schritt des Berechnens, ein Maximalwert einem Koeffizienten eines benachbarten Zugangspunkts (AP$_{n-1}$, AP$_{n+1}$) für den gleichen Kanal wie der Kanal (F$_2$), welcher dem Zugangspunkt (AP$_n$) zugeteilt ist, zugeteilt wird.

4.  Verfahren gemäß dem Anspruch 3, wobei, bei dem Schritt des Berechnens, ein Wert, welcher höchstens 90% des Maximalwerts entspricht, einem Koeffizienten eines benachbarten Zugangspunkts (AP$_{n-1}$, AP$_{n+1}$) für einen Kanal (F$_1$), welcher die zur Frequenz des betrachteten Kanals nächstkleinere Frequenz hat, oder einen Kanal, welcher die zur Frequenz des betrachteten Kanals (F$_1$) nächstgrößere Frequenz (F$_3$) hat, zugeteilt wird.

5.  Verfahren gemäß dem Anspruch 1 bis 4, wobei, bei dem Schritt des Berechnens, die Koeffizienten (ti,j) der Summe in einer Tabelle (T$_n$) aufgelistet sind.

6.  Verfahren gemäß dem Anspruch 5, wobei eine Tabelle (T$_i$) jedem Zugangspunkt (AP$_i$) zugeordnet ist, wobei jede Tabelle (T$_i$) in dem korrespondierenden Zugangspunkt (AP$_i$) gespeichert ist.

7.  Verfahren gemäß irgendeinem der Ansprüche 1 bis 6, wobei das Verfahren ferner einen Schritt des Ermittelns von verfügbaren Kanälen (F$_1$, F$_3$) aufweist, wobei die verfügbaren Kanäle (F$_1$, F$_3$) die einem Zugangspunkt nicht zugeteilten Kanäle sind, wobei der Schritt des Berechnens nur für die verfügbaren Kanäle (F$_1$, F$_3$) durchgeführt wird.

8.  Verfahren gemäß irgendeinem der Ansprüche 1 bis 7, wobei das Verfahren ferner aufweist die Schritte:

    - des Wartens einer vordefinierte Zeit,
    - des Verifizierens der momentanen Nutzung des ermittelten Kanals (F$_1$) durch einen anderen Nutzer, und
    - des Wechselns des Zugangspunkts auf den ermittelten Kanal (F$_1$), wenn der ermittelte Kanal (F$_1$) nicht mehr durch einen anderen Nutzer genutzt wird.

9.  Verfahren nach dem Anspruch 8, wobei jeder Zugangspunkt (AP$_i$) ein erstes Funkfrequenz-Frontend und ein zweites Funkfrequenz-Frontend aufweist, wobei jedes Funkfrequenz-Frontend zur Kommunikation auf einem Kanal bestimmt ist, wobei der Schritt des Verifizierens durch ein einziges Funkfrequenz-Frontend durchgeführt wird.

10. Eisenbahnarchitektur (10), welche eine Steuereinrichtung aufweist, welche ein Verfahren zur Steuerung der Zuteilung von Kanälen (F$_1$, F$_2$, F$_3$) an Zugangspunkte (AP$_i$) durchführt, wobei die Zugangspunkte (AP$_i$) zu der Eisenbahnarchitektur (10) gehören, wobei jeder Kanal (F$_1$, F$_2$, F$_3$) mit einer bestimmten Frequenz korrespondiert, wobei die Nutzung von mindestens einem Kanal (F$_1$, F$_2$, F$_3$) zwischen der Eisenbahnarchitektur (10) und einem anderen Nutzer, welcher bei der Nutzung des Kanals (F2) Vorrang vor den Zugangspunkten (AP$_i$) hat, aufgeteilt wird, wobei die Steuereinrichtung dazu geeignet ist:

    - ein Signal eines anderen Nutzers auf einem Kanal (F$_2$), welcher einem Zugangspunkt (AP$_n$) zugeteilt ist, zu erfassen,
    - für eine Mehrzahl von Kanälen (F$_j$), welche von dem zugeteilten Kanal (F2) verschieden sind, Kostenfunktion zu berechnen, wobei die Kostenfunktion der Frequenz eines Kanals einen Kostenfaktor (C) zuordnet, wobei der Kostenfaktor (C) eine Summe der Koeffizienten (ti,j) ist, welche repräsentativ sind für mögliche Interferenzen mit den Zugangspunkten, welche auf einem Kanal arbeiten, der aus der Gruppe, die durch den betrachteten Kanal (F$_j$), den Kanal (F$_{j-1}$) mit der zur Frequenz des betrachteten Kanals (F$_j$) nächstkleineren Frequenz und den Kanal (F$_{j+1}$) mit der zur Frequenz des betrachteten Kanals (F$_j$) nächstgrößeren Frequenz gebildet ist, ausgewählt ist,

- den Kanal zu ermitteln, für welchen der Wert durch die Kostenfunktion am niedrigsten ist, um einen ermittelten Kanal ($F_1$) zu erlangen, und
- den Zugangspunkt ($AP_n$) auf den ermittelten Kanal ($F_1$) zu wechseln.

**Claims**

1. Channel allocation management method ($F_1$, $F_2$, $F_3$) at access points ($AP_i$), wherein the access points ($AP_i$) belong to a railway architecture (10), the railway architecture (10) comprising a controller, each channel ($F_1$, $F_2$, $F_3$) corresponds to a specific frequency, the use of at least one channel ($F_2$) is shared between the railway architecture (10) and another user having priority in the use of the channel ($F_2$) with respect to the access points ($AP_i$), the method being implemented by the controller and comprising the steps of :

   - detecting a signal from another user on a channel ($F_2$) allocated to an access point ($AP_n$)
   - for a plurality of channels ($F_j$) different from the allocated channel ($F_2$), calculating a cost function, wherein the cost function associates a cost (C) with the frequency of a channel, and wherein the cost (C) is a sum of coefficients ($t_{i,j}$) representative of the possible interferences between the access points ($AP_i$) operating on a channel selected from the group consisting of the channel considered ($F_j$), of the channel ($F_{j-1}$) having the closest lower frequency to the frequency of the considered channel and the channel ($F_{j+1}$) having the higher closest frequency to the frequency of the considered channel ($F_j$),
   - determining the channel for which the value by the cost function is the lowest in order to obtain a determined channel ($F_1$), and
   - switching of the access point ($AP_n$) to the determined channel ($F_1$).

2. Method according to claim 1, wherein, in the step of calculations, the coefficients ($t_{i,j}$) of the sum are weighted by the distance between the access point ($AP_n$) having detected the signal of another user and each access point ($AP_i$) with which interference is possible.

3. Method according to claim 1 or 2, wherein, in the step of calculation, a maximum value is assigned to a coefficient of an adjacent access point ($AP_{n-1}$, $AP_{n+1}$) for the same channel as the channel ($F_2$) allocated to the access point ($AP_n$).

4. Method according to claim 3, wherein, in the step of calculation, a value corresponding to at most 90% of the maximum value is allocated to a coefficient of an adjacent access point ($AP_{n-1}$, $AP_{n+1}$) for a channel ($F_1$) having the closest lower frequency to the frequency of the channel considered or a channel having the closest higher frequency ($F_3$) to the frequency of the considered channel ($F_1$).

5. Method according to claim 1 to 4, wherein, in the step of calculation, the coefficients ($t_{i,j}$) of the sum are tabulated in a table ($T_n$).

6. Method according to claim 5, wherein a table ($T_i$) is associated with each access point ($AP_i$), each table ($T_i$) being stored in the corresponding access point ($AP_i$).

7. Method according to any one of the claims 1 to 6, wherein the method further comprises a step of determining the available channels ($F_1$, $F_3$), the available channels ($F_1$, $F_3$) being channels not allocated to an access point, the step of calculation being only carried out for the available channels ($F_1$, $F_3$).

8. Method according to any one of the claims 1 to 7, wherein the method further comprises steps of :

   - waiting for a predefined time,
   - checking the current use of the determined channel ($F_1$) by another user, and
   - switching the access point to the determined channel ($F_1$) when the determined channel ($F_1$) is no longer used by another user.

9. Method according to claim 8, wherein each access point ($AP_i$) comprises a first radio frequency front end and a second radio frequency front end, and each radio frequency front end being intended for communication on one channel, and the step of checking being carried out by a single radio frequency front end.

10. Railway architecture (10) comprising a controller capable of implementing a channel allocation management method ($F_1$, $F_2$, $F_3$) at access points ($AP_i$), wherein the access points ($AP_i$) belong to a railway architecture (10), each channel ($F_1$, $F_2$, $F_3$) corresponds to a specific frequency, the use of at least one channel ($F_2$) is shared between the railway architecture (10) and another priority user in the use of the channel ($F_2$) with respect to the access points ($AP_i$), the controller being able to ::

   - detect a signal from another user on a channel ($F_2$) allocated to an access point ($AP_n$)
   - for a plurality of channels ($F_j$) different from the allocated channel ($F_2$), calculate a cost function, wherein the cost function associates a cost (C) with the frequency of a channel, and wherein the cost (C) is a sum of coefficients ($t_{i,j}$) representative of the possible interferences with the access points ($AP_i$) operating on a channel selected from the group consisting of the channel considered ($F_j$), of the channel ($F_{j-1}$) having the closest lower frequency to the frequency of the channel considered and the channel ($F_{j+1}$) having the closest higher frequency to the frequency of the channel considered ($F_j$),

- determine the channel for which the value by cost function is the lowest in order to obtain a determined channel ($F_1$), and
- switch of the access point ($AP_n$) to the determined channel ($F_1$).

## FIG.1

| | $f_1$ | $f_2$ | $f_3$ |
|---|---|---|---|
| x-15 | | 1 | |
| | | ... | |
| x-7 | | 10 | |
| x-6 | | 20 | |
| x-5 | | 60 | |
| x-4 | 10 | 70 | 10 |
| x-3 | 30 | 80 | 30 |
| x-2 | 60 | 89 | 60 |
| x-1 | 90 | 100 | 90 |
| x | | | |
| x+1 | 90 | 100 | 90 |
| x+2 | 60 | 90 | 60 |

## FIG.2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2006094371 A1
- US 2016113026 A1
- EP 3104636 A1